# EUROPÄISCHE PATENTSCHRIFT

(11) **EP 2 653 889 B1**
(45) Veröffentlichungstag und Bekanntmachung des Hinweises auf die Patenterteilung: **31.10.2018**
(21) Anmeldenummer: 13162644.2
(22) Anmeldetag: 08.04.2013
(51) Int. Cl.: G01S 17/93

(54) **Optoelektronische Sensoreinrichtung mit verbesserter Empfangsoptik, Kraftfahrzeug und entsprechendes Verfahren**
Optoelectronic sensor device with improved reception optics, motor vehicle and corresponding method
Dispositif de capteur optoélectronique doté d'une optique de réception améliorée, véhicule et procédé correspondant

(30) Priorität: 20.04.2012 DE 102012007983
(43) Veröffentlichungstag der Anmeldung: 23.10.2013
(73) Patentinhaber: Valeo Schalter und Sensoren GmbH, 74321 Bietigheim-Bissingen (DE)
(72) Erfinder: Jan, Simon, 75056 Sulzfeld (DE); Schuler, Thomas, 74321 Bietigheim-Bissingen (DE); Korkut, Mehmet, 74321 Bietigheim-Bissingen (DE)

(56) Entgegenhaltungen:
- DE-A1- 3 244 358
- DE-A1- 10 331 074
- US-A1- 2009 201 486

## Beschreibung

Die Erfindung betrifft eine optoelektronische Sensoreinrichtung für ein Kraftfahrzeug, welche zum Erfassen von in einem Umgebungsbereich des Kraftfahrzeugs befindlichen Objekten ausgebildet ist. Die Sensoreinrichtung umfasst eine Sendeeinheit zum Aussenden eines optischen Sendestrahls, wie auch eine Empfangseinheit zum Empfangen eines Empfangsstrahls, welcher der von einem Objekt reflektierte Sendestrahl ist. Die Empfangseinheit weist zumindest zwei entlang einer Verteilungsrichtung verteilt angeordnete Empfangselemente auf, nämlich insbesondere Photodioden, bevorzugt Avalanche-Photodioden. Die Empfangselemente dienen jeweils zum Empfangen des Empfangsstrahls. Die Empfangseinheit hat außerdem eine Empfangsoptik - beispielsweise eine Empfangslinse -, welche in einem Empfangsstrahlengang in Ausbreitungsrichtung des Empfangsstrahls vor den Empfangselementen angeordnet beziehungsweise den Empfangselementen vorgelagert ist. Die Erfindung betrifft außerdem ein Kraftfahrzeug mit einer solchen optoelektronischen Sensoreinrichtung, wie auch ein Verfahren zum Betreiben einer solchen Sensoreinrichtung.

Es ist bereits Stand der Technik, eine optische Sensoreinrichtung in einem Kraftfahrzeug einzusetzen, um einen Fahrer des Kraftfahrzeugs beim Führen des Kraftfahrzeugs zu unterstützen. Optische Messeinrichtungen sind auch unter der Bezeichnung "LIDAR" bekannt und dienen zur Erfassung von Objekten, die sich in der Umgebung des Kraftfahrzeugs befinden. Beispielsweise wird mittels eines derartigen LIDAR-Systems der Abstand zwischen dem Kraftfahrzeug einerseits und einem in seiner Umgebung befindlichen Objekt andererseits gemessen. Es ist bereits bekannt, eine optische Sensoreinrichtung hinter einer Windschutzscheibe des Kraftfahrzeugs zu platzieren, um Objekte erfassen zu können, die sich in Fahrtrichtung vor dem Kraftfahrzeug befinden. Solche Systeme ermöglichen dabei eine Erkennung von Objekten bis zu einer Entfernung von sogar über 100 m vom Kraftfahrzeug, nämlich je nachdem, wie die Sendeeinheit und somit der Sendestrahl ausgerichtet ist.

Vorliegend richtet sich das Interesse insbesondere auf eine solche Sensoreinrichtung, bei welcher die Sendeeinheit keine beweglichen Komponenten (Spiegel und der gleichen) zum Verschwenken des Sendestrahls beinhaltet, bei welcher also der Sendestrahl stets in die gleiche Richtung ausgesendet wird. Eine besondere Herausforderung besteht nun darin, mit einer solchen Sendeeinheit einen möglichst breiten Umgebungsbereich des Kraftfahrzeugs abzudecken, sodass verschiedenste Objekte in unterschiedlichen Entfernungen vom Kraftfahrzeug detektiert werden können.

Bei solchen Sensoreinrichtungen ist es zur Erreichung eines entsprechend großen Erfassungsbereichs erforderlich, einen Sendestrahl mit einem relativ großen Öffnungswinkel bereitzustellen. Um einen breiten Sendestrahl zu erzeugen, wird im Dokument US 7 544 945 B2 eine spezielle Linse vorgeschlagen, welche vor der Sendeeinheit platziert wird. Mehrere Laserdioden erzeugen jeweils einen Laserstrahl, die dann mittels dieser Linse zu einem gemeinsamen, breiten Sendestrahl zusammengefasst werden.

Aus dem Dokument US 2012/0033079 A1 ist eine Kamera bekannt, welche einen Bildwandler beinhaltet, der aus mehreren Regionen besteht. Um unterschiedliche Objekte zu erfassen, werden vor den unterschiedlichen Regionen des Bildwandlers jeweils verschiedene Mikrolinsen platziert. Somit können die optischen Strahlen auf die jeweils zugeordnete Bildregion des Bildwandlers fokussiert werden.

Eine weitere Sensoreinrichtung ist aus DE 3244358 A1 vorbekannt. Es ist Aufgabe der Erfindung, eine Lösung aufzuzeigen, wie bei einer Sensoreinrichtung der eingangs genannten Gattung die in der Umgebung des Kraftfahrzeugs befindlichen Objekte besonders zuverlässig detektiert werden können.
Diese Aufgabe wird erfindungsgemäß durch eine optoelektronische Sensoreinrichtung, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße optische Sensoreinrichtung bzw. Messeinrichtung für ein Kraftfahrzeug dient zum Erfassen von Objekten, die sich in einem Umgebungsbereich des Kraftfahrzeugs befinden, und insbesondere zur Messung einer Entfernung zwischen den Objekten einerseits und dem Kraftfahrzeug andererseits. Die Sensoreinrichtung weist eine Sendeeinheit sowie eine Empfangseinheit auf. Während die Sendeeinheit zum Aussenden eines optischen Sendestrahls ausgebildet ist, dient die Empfangseinheit zum Empfangen eines Empfangsstrahls, also des von einem Objekt reflektierten Sendestrahls. Die Empfangseinheit umfasst zumindest zwei entlang einer Verteilungsrichtung verteilt angeordnete Empfangselemente, insbesondere Photodioden, jeweils zum Empfangen des Empfangsstrahls, wie auch eine Empfangsoptik, die in einem Empfangsstrahlengang in Ausbreitungsrichtung des Empfangsstrahls vor den Empfangselementen angeordnet ist. Die Empfangselemente können beispielsweise als Avalanche-Photodioden ausgebildet sein. Erfindungsgemäß ist vorgesehen, dass die Empfangsoptik - beispielsweise eine Linse - für die zumindest zwei Empfangselemente jeweilige Optikelemente (beispielsweise Mikrolinsen) aufweist, welche zum Ausrichten beziehungsweise Fokussieren des Empfangsstrahls auf das jeweils zugeordnete Empfangselement ausgebildet sind. Dabei ist ein erstes der Optikelemente dazu ausgebildet, einen in einem ersten Winkel bezüglich einer horizontalen Ebene (im Betrieb der Sensoreinrichtung) einfallenden Empfangsstrahl auf das zugeordnete Empfangselement auszurichten, während ein zweites der Optikelemente dazu ausgebildet ist, einen in einem von dem ersten Winkel unterschiedlichen zweiten vertikalen Winkel bezüglich der horizontalen Ebene einfallenden Empfangsstrahl auf das zugeordnete Empfangselement auszurichten.

Insbesondere weisen die Optikelemente in vertikaler Richtung - also in Elevation - unterschiedliche Haupterfassungsrichtung bzw. Hauptempfangsrichtungen auf, so dass sich auch unterschiedliche vertikale Erfassungsbereiche der Optikelemente ergeben.

Mit anderen Worten wird die Empfangsoptik derart ausgestaltet, dass sie für die zumindest zwei Empfangselemente jeweilige Optikelemente aufweist, welche dazu ausgebildet sind, jeweils in unterschiedlichen Vertikalwinkeln bezüglich der horizontalen Ebene, also aus unterschiedlichen vertikalen Richtungen einfallende Empfangsstrahle auf das jeweils zugeordnete Empfangselement umzulenken, sodass die zumindest zwei Empfangselemente Signale aus unterschiedlichen vertikalen Richtungen empfangen und somit auch Objekte in unterschiedlichen vertikalen Positionen bezüglich des Kraftfahrzeugs erfassen können. Es wird somit in vertikaler Richtung zwischen mehreren Empfangszonen unterschieden, sodass mit einem einzigen und in seiner Richtung konstanten Sendestrahl auch Objekte in unterschiedlichen Entfernungen vom Kraftfahrzeug und/oder vertikalen Positionen relativ zum Kraftfahrzeug detektiert werden können. So kann beispielsweise ein Optikelement der Empfangsoptik bezüglich der horizontalen Ebene nach unten orientiert sein, sodass Hindernisse im Nahbereich des Kraftfahrzeugs erfasst werden können, während ein weiteres Optikelement bezüglich der horizontalen Ebene nach oben ausgerichtet werden kann, um beispielsweise Tunneldecken beziehungsweise Tunneleinfahrten und/oder Brücken detektieren zu können. Durch die erfindungsgemäße Ausgestaltung der Empfangsoptik wird ermöglicht, nicht nur in einer einzigen horizontalen Ebene Objekte und Gegenstände zu detektieren, sondern auch Objekte in anderen horizontalen Ebenen zu erfassen, wie beispielsweise spielende Kinder, die sich in einer sehr geringen Entfernung vor dem Kraftfahrzeug befinden. Es wird somit eine Sensoreinrichtung geschaffen, welche in vertikaler Richtung einen besonders breiten Erfassungsbereich aufweist und bei welcher andererseits auch zwischen Objekten in unterschiedlichen vertikalen Erfassungszonen unterschieden werden kann.

Bevorzugt sind die zumindest zwei Optikelemente bezüglich der horizontalen ebene unterschiedlich geneigt angeordnet. Das erste Optikelement kann zur Ausrichtung des Empfangsstrahls auf das zugeordnete Empfangselement in einer ersten Neigung bezüglich der horizontalen Ebene angeordnet sein. Demgegenüber kann das zweite Optikelement zur Ausrichtung des Empfangsstrahls auf das zugeordnete Empfangselement in einer von der ersten Neigung unterschiedlichen zweiten Neigung bezüglich der horizontalen Ebene angeordnet sein. Insbesondere sind dabei die jeweiligen optischen Längsachsen der Optikelemente unterschiedlich bezüglich der horizontalen Ebene geneigt. Die erste Neigung kann dabei dem oben genannten ersten Winkel entsprechen, und die zweite Neigung kann dem zweiten Winkel entsprechen.

Bevorzugt ist die Sensoreinrichtung so ausgebildet, dass die Sendeeinheit keine beweglichen Elemente zum Verschwenken des Sendestrahls besitzt. Somit weist die Sendeeinheit stets eine konstante Senderichtung auf, sodass der Sendestrahl stets in dieselbe Richtung ausgesendet wird. Um nun einen relativ breiten Erfassungsbereich sowohl in horizontaler als auch in vertikaler Richtung zu erzielen, wird bevorzugt eine Sendeeinheit verwendet, deren Sendestrahl in horizontaler Richtung einen Öffnungswinkel von beispielsweise 60° und/oder in vertikaler Richtung einen Öffnungswinkel von 4° bis 9° aufweist. Es können dabei sogar mehrere statische strichartige Lichtquellen eingesetzt werden, um mit hinreichender Leistung einen breiten optischen Sendestrahl zu gewährleisten, und zwar nicht nur in horizontaler, sondern auch in vertikaler Richtung. Dies kann beispielsweise auch dadurch ermöglicht werden, dass eine Fresnel-Linse, insbesondere auch in Form einer Fresnelschen Folie, vor den jeweiligen strichartigen Lichtquellen platziert wird.

Vorzugsweise fällt die Verteilungsrichtung der zumindest zwei Empfangselemente mit der Horizontalen zusammen, sodass die Empfangselemente entlang der Horizontalen verteilt angeordnet sind. Wenn vorliegend auf eine horizontale oder aber vertikale Richtung Bezug genommen wird, wird dabei von einer im Kraftfahrzeug ordnungsgemäß beziehungsweise bestimmungsgemäß verbauten und sich somit im Betrieb befindenden Sensoreinrichtung ausgegangen. Durch eine Verteilung der zumindest zwei Empfangselemente in horizontaler Richtung wird erreicht, dass neben einem breiten Erfassungsbereich in vertikaler Richtung auch ein besonders breiter Erfassungsbereich in horizontaler Richtung ermöglicht wird. Beispielsweise können mindestens drei, insbesondere mindestes vier, noch bevorzugter mindestens sechs, und in einer Ausführungsform sechzehn Empfangselemente eingesetzt werden, welche alle in horizontaler Richtung beziehungsweise entlang der Horizontalen geradlinig verteilt angeordnet sind.

In einer Ausführungsform weist die Empfangseinheit mindestens drei Empfangselemente auf, und die Empfangsoptik weist für alle Empfangselemente jeweils ein Optikelement auf, wobei die Optikelemente dazu ausgebildet sind, jeweils aus unterschiedlichen Winkeln bezüglich der horizontalen Ebene einfallende Empfangsstrahle auf das jeweils zugeordnete Empfangselement auszurichten, sodass die zumindest drei Empfangselemente jeweilige Empfangsstrahle aus unterschiedlichen vertikalen Richtungen empfangen können und folglich Objekte in mindestens drei unterschiedlichen vertikalen Positionen beziehungsweise vertikalen Zonen erfasst werden können. Somit können gleichzeitig drei verschiedene Funktionalitäten realisiert werden: Eines der Empfangselemente kann einen Empfangsstrahl empfangen, der bezüglich der horizontalen Ebene aus einer Richtung von unten einfällt. Somit können mit diesen Empfangselementen Objekte detektiert werden, die sich besonders nah an dem Kraftfahrzeug befinden, wie beispielsweise Personen und dergleichen. Ein weiteres Empfangselement kann demgegenüber einen Empfangsstrahl empfangen, der bezüglich der horizontalen Ebene aus einer Richtung von oben einfällt, sodass die Sensoreinrichtung Brücken und/oder Tunneldecken detektieren kann. Dies kann dazu genutzt werden, um beispielsweise einen Scheinwerfer des Kraftfahrzeugs zu steuern, um beispielsweise vor einer Tunneleinfahrt das Licht automatisch einzuschalten. Ein drittes Empfangselement wiederum kann einen Empfangstrahl empfangen, der sich in einem Winkelbereich von ±5° bezüglich der horizontalen Ebene, insbesondere im Wesentlichen in horizontaler Richtung beziehungsweise in der horizontalen Ebene, ausbreitet, sodass auch Objekte detektiert werden können, die sich in einer relativ großen Entfernung vom Kraftfahrzeug befinden. Somit kann beispielsweise der Abstand zu einem vorausfahrenden Kraftfahrzeug und somit auch die so genannte Zeit bis zur Kollision (time to collision) gemessen werden und/oder es können Fußgänger detektiert werden, die unerwartet auf die Fahrbahn gelangen.

Hinsichtlich der Ausgestaltung der Empfangsoptik können grundsätzlich verschiedenste Ausführungsformen vorgesehen sein:
Die Empfangsoptik kann als eine für die zumindest zwei Empfangselemente gemeinsame Linse ausgebildet sein, in welcher zumindest zwei Mikrolinsen als Optikelemente integriert sind. Für jedes Empfangselement ist somit jeweils eine Mikrolinse bereitgestellt, weiche in vertikaler Richtung entsprechend ausgerichtet und positioniert ist. Bei dieser Ausführungsform kommt die Empfangseinheit mit lediglich einer einzigen Empfangslinse aus, sodass die Anzahl der Elemente auf ein Minimum reduziert wird. Diese Ausführungsform ist somit besonders einfach zu realisieren. Diese Linse kann auch nach Art einer Fresnellinse mit mehreren kleineren Mikroelementen ausgeführt sein.

Alternativ kann jedoch auch vorgesehen sein, dass die zumindest zwei Optikelemente als voneinander separate Linsen ausgebildet sind, welche bezüglich der horizontalen Ebene - also in Elevation - unterschiedlich ausgerichtet sind und somit jeweils aus unterschiedlichen vertikalen Richtungen einfallende Empfangsstrahle auf das jeweils zugeordnete Empfangselement fokussieren können. Auch diese Ausführungsform kann ohne viel Aufwand realisiert werden und sorgt außerdem besonders wirkungsvoll dafür, dass die aus unterschiedlichen vertikalen Richtungen einfallenden Empfangsstrahle auf die jeweiligen Empfangselemente ausgerichtet werden.

Ergänzend oder alternativ kann auch vorgesehen sein, dass die Empfangsoptik zumindest ein Spiegelelement als Optikelement aufweist, mittels welchem der Empfangsstrahl auf das jeweils zugeordnete Empfangselement umgelenkt bzw ausgerichtet werden kann. Ein solches Spiegelelement kann beispielsweise direkt vor dem zugeordneten Empfangselement oder aber vor einer Linse angeordnet sein.

Um die Komplexität und insbesondere das Gewicht der Empfangsoptik auf ein Minimum zu reduzieren, ist in einer Ausführungsform vorgesehen, dass die Empfangsoptik aus Kunststoff gebildet ist.

Die Empfangsoptik kann auch aus einem III-V-Material gebildet sein.

Wie bereits ausgeführt, kann eines der Optikelemente dazu ausgebildet sein, einen bezüglich der horizontalen Ebene von oben einfallenden Empfangsstrahl auf das zugeordnete Empfangselement auszurichten. Auf diese Weise lassen sich Brücken und/oder Tunneldecken besonders zuverlässig detektieren.

Ergänzend oder alternativ kann auch vorgesehen sein, dass eines der Optikelemente dazu ausgebildet ist, einen bezüglich der horizontalen Ebene von unten einfallenden Empfangstrahl auf das zugeordnete Empfangselement auszurichten. Somit ist es möglich, Hindernisse zu erfassen, die sich in einer sehr geringen Entfernung vom Kraftfahrzeug befinden, wie beispielsweise in einer Entfernung von etwa 1 m vom Kraftfahrzeug. Diese Ausführungsform erweist sich unter anderem dann als besonders vorteilhaft, wenn die Sensoreinrichtung beispielsweise hinter der Heckscheibe platziert wird und somit die unmittelbar hinter dem Kraftfahrzeug befindlichen Hindernisse erfasst. Wird ein derartiges, im Nahbereich hinter dem Kraftfahrzeug befindliches Hindernis detektiert, so kann eine entsprechende Warnung an den Fahrer ausgegeben werden, und zwar beispielsweise nach Einlegen des Rückwärtsgangs.

Ein erfindungsgemäßes Kraftfahrzeug umfasst eine erfindungsgemäße optoelektronische Sensoreinrichtung.

Die Erfindung betrifft auch ein Verfahren zum Betreiben einer optischen Sensoreinrichtung eines Kraftfahrzeugs, mittels welcher in einem Umgebungsbereich des Kraftfahrzeugs befindliche Objekte erfasst werden, wobei mittels einer Sendeeinheit der Sensoreinrichtung ein optischer Sendestrahl ausgesendet wird und mittels einer Empfangseinheit ein Empfangsstrahl empfangen wird, der der von einem Objekt reflektierten Sendestrahl ist, wobei die Empfangseinheit zumindest zwei entlang einer Verteilungsrichtung verteilt angeordnete Empfangselemente, insbesondere Photodioden, jeweils zum Empfangen eines Empfangsstrahls sowie eine Empfangsoptik aufweist, welche in einem Empfangsstrahlengang in Ausbreitungsrichtung des Empfangsstrahls vor den Empfangselementen angeordnet ist. Die Empfangsoptik weist für die zumindest zwei Empfangselemente jeweilige Optikelemente auf, welche zum Ausrichten des Empfangsstrahls auf das jeweils zugeordnete Empfangselement ausgebildet sind, wobei ein erstes der Optikelemente einen aus einem ersten Winkel bezüglich einer horizontalen Ebene einfallenden Empfangsstrahl auf das zugeordnete Empfangselement ausrichtet und ein zweites der Optikelemente einen aus einem von dem ersten Winkel unterschiedlichen zweiten Winkel bezüglich der horizontalen Ebene einfallenden Empfangsstrahl auf das zugeordnete Empfangselement ausrichtet.

Die mit Bezug auf die erfindungsgemäße Sensoreinrichtung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert. Es sei an dieser Stelle betont, dass das nachfolgend beschriebene Ausführungsbeispiel lediglich eine beispielhafte Ausführungsform der Erfindung darstellt und die Erfindung somit nicht auf diese beispielhafte Ausführung beschränkt ist.

Es zeigen:
- Fig. 1: in schematischer Darstellung eine Empfangseinheit einer optischen Sensoreinrichtung gemäß dem Stand der Technik; und
- Fig. 2: eine Empfangseinheit einer Sensoreinrichtung gemäß einer Ausführungsform der Erfindung.

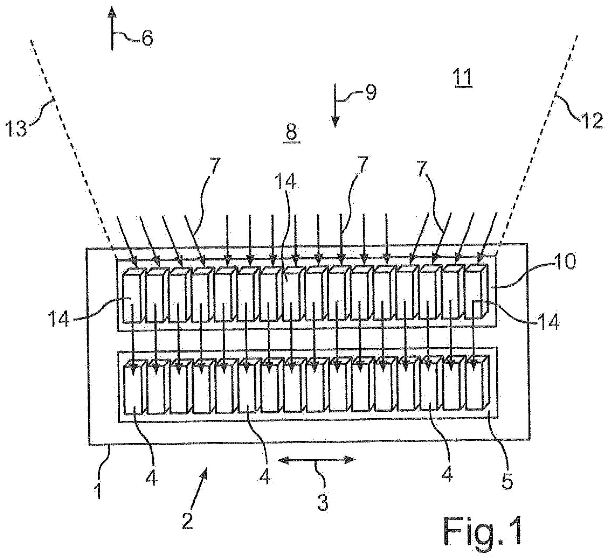

In Fig. 1 ist eine Empfangseinheit 1 einer optoelektronischen Sensoreinrichtung 2 eines Kraftfahrzeugs gemäß dem Stand der Technik dargestellt. Die Sensoreinrichtung 2 kann beispielsweise hinter einer Windschutzscheibe platziert sein. Die Empfangseinheit 1 beinhaltet eine Vielzahl von in einer Verteilungsrichtung 3 verteilt angeordneten Empfangselementen 4, von denen in Fig. 1 der Übersicht halber lediglich einige bezeichnet sind. Die Empfangselemente 4 sind beispielsweise Avalanche-Photodioden oder aber herkömmliche Photodioden. Sie sind entlang der Verteilungsrichtung 3 geradlinig verteilt angeordnet. Insgesamt gibt es im Beispiel gemäß Fig. 1 sechzehn solcher Empfangselemente 4, welche beispielsweise auf einer gemeinsamen Platine 5 beziehungsweise als eigenständiges Bauteil ausgeführt werden können. Die Verteilungsrichtung 3 fällt mit der Horizontalen zusammen, sodass die Empfangselemente 4 entlang der Horizontalen verteilt angeordnet sind und somit in einer gemeinsamen horizontalen Ebene liegen. In Fig. 1 ist dabei eine Draufsicht auf die Empfangseinheit 1 dargestellt, wobei die Fahrtrichtung des Kraftfahrzeugs mit 6 bezeichnet ist.

Über der Empfangseinheit 1 befindet sich eine in den Figuren nicht näher dargestellte Sendeeinheit, welche eine oder mehrere Sendestrahlquellen - beispielsweise Laserdioden - beinhalten kann, welche zum Erzeugen eines Sendestrahls ausgebildet sind. Der Sendestrahl wird beispielsweise in Fahrtrichtung 6 nach vorne ausgesendet und reflektiert dann an Objekten, die sich in der Umgebung des Kraftfahrzeugs befinden.

Der reflektierte Sendestrahl gelangt dann wieder in Form eines Empfangsstrahls 7 zur Empfangseinheit 1 und wird mithilfe der Empfangselemente 4 empfangen. In einem Empfangsstrahlengang 8 des Empfangsstrahls 7 befindet sich eine Empfangsoptik 10, welche in Ausbreitungsrichtung 9 des Empfangsstrahls 7 vor den Empfangselementen 4 angeordnet ist. Die Empfangsoptik 10 dient dazu, den Empfangsstrahl 7 auf die Empfangselemente 4 zu richten beziehungsweise zu fokussieren. Die Empfangsoptik 10 ist im Stand der Technik so ausgebildet, dass sie einen relativ breiten Erfassungsbereich 11 in horizontaler Richtung aufweist, welcher in Fig. 1 schematisch mit Begrenzungslinien 12, 13 seitlich begrenzt ist. Wie aus Fig. 1 hervorgeht, weist die Empfangseinheit 1 somit einen relativ breiten Erfassungswinkel in horizontaler Richtung auf, sodass Objekte nicht nur direkt vor dem Kraftfahrzeug, sondern auch seitlich neben dem Kraftfahrzeug erfasst werden können. Um einen solchen breiten Erfassungswinkel in horizontaler Richtung zu erreichen, kann die Empfangsoptik 10 zu jedem Empfangselement 4 jeweils ein Optikelement 14 aufweisen, wobei in Fig. 1 der Übersicht halber wiederum nur einige Optikelemente 14 bezeichnet sind. Um einen breiten Erfassungswinkel in horizontaler Richtung zu erreichen, können die äußeren Optikelemente in horizontaler Richtung eine andere Haupterfassungsrichtung aufweisen als die mittleren Optikelemente 14. Die äußeren Optikelemente 14 können nämlich beispielsweise in horizontaler Richtung anders ausgerichtet sein als die mittleren Optikelemente 14. Jedoch weisen alle Optikelemente 14 in vertikaler Richtung (in Elevation) jeweils gleiche Haupterfassungsrichtungen auf, sodass lediglich Empfangsstrahle 7 empfangen werden können, die aus einem bestimmten Winkel in horizontaler Richtung einfallen.

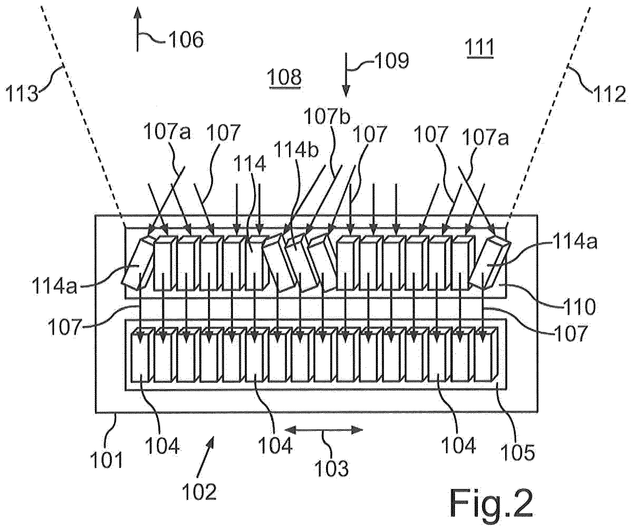

Fig. 2 zeigt nun eine Empfangseinheit 101 einer optoelektronischen Sensoreinrichtung 102 gemäß einer Ausführungsform der Erfindung. Die Sensoreinrichtung 102 kann beispielsweise an einer Windschutzscheibe oder an einer Heckscheibe eines Kraftfahrzeugs, insbesondere eines Personenkraftwagens, platziert sein. Die Empfangseinheit 101 beinhaltet eine Vielzahl von in Verteilungsrichtung 103 verteilt angeordneten Empfangselementen 104, welche beispielsweise Avalanche-Photodioden oder aber herkömmliche Photodioden sein können. Die Empfangseinheit 101 beinhaltet beispielsweise sechzehn solche Empfangselemente 104. Die Empfangselemente 104 können beispielsweise auf einer gemeinsamen Leiterplatte 105 angeordnet sein und somit als ein eigenständiges Bauteil ausgebildet sein. Die Verteilungsrichtung 103 fällt mit der horizontalen Richtung zusammen, sodass die Empfangselemente 104 in horizontaler Richtung beziehungsweise entlang der Horizontalen verteilt angeordnet sind. Sie liegen somit in einer gemeinsamen horizontalen Ebene.

Wie im Beispiel gemäß Fig. 1, ist auch bei der Sensoreinrichtung 102 gemäß Fig. 2 eine Sendeeinheit vorgesehen, welche insbesondere über der Empfangseinheit 101 liegt. Diese Sendeeinheit sendet einen Sendestrahl in eine Senderichtung 106 aus, welche - je nachdem, wo die Sensoreinrichtung 102 angeordnet ist - in Fahrtrichtung oder aber entgegen der Fahrtrichtung des Kraftfahrzeugs zeigt. Der Sendestrahl wird beispielsweise mithilfe einer oder mehrerer Lichtquellen, insbesondere Laserdioden, erzeugt. Um einen breiten Erfassungswinkel sowohl in vertikaler als auch in horizontaler Richtung zu erzielen, wird insbesondere ein Sendestrahl erzeugt, der in horizontaler Richtung einen Öffnungswinkel von beispielsweise 50° bis 90° und in vertikaler Richtung von 4° bis 9° aufweist. Die Ausrichtung dieses Sendestrahls bezüglich der horizontalen Ebene beziehungsweise bezüglich des Bodens kann grundsätzlich beliebig sein.

Der Sendestrahl reflektiert dann - wie bereits ausgeführt - an einem im Umgebungsbereich des Kraftfahrzeugs befindlichen Objekt und gelangt dann wieder in Form eines Empfangsstrahls 107 zur Empfangseinheit 101 und wird mithilfe der Empfangselemente 104 empfangen und dann mittels einer nicht dargestellten Auswerteeinrichtung ausgewertet.

In einem Empfangsstrahlengang 108 befindet sich in Ausbreitungsrichtung 109 des Empfangsstrahls 107 vor den Empfangselementen 104 eine Empfangsoptik 110, welche die Aufgabe hat, den Empfangsstrahl 107 auf die Empfangselemente 104 zu richten beziehungsweise zu fokussieren. Um nun mit der Empfangseinheit 101 einen breiten Erfassungswinkel nicht nur in horizontaler, sondern auch in vertikaler Richtung zu erzielen, ist die Empfangsoptik 110 so ausgebildet, dass sie auch in vertikaler Orientierung unterschiedliche Haupterfassungsrichtungen, also unterschiedliche Elevationswinkel, aufweist und somit in unterschiedlichen vertikalen Winkeln einfallende Empfangsstrahle 107 empfangen kann. Neben einem relativ breiten Erfassungsbereich 111 in horizontaler Richtung, welcher mit Begrenzungslinien 112, 113 - wie in Fig. 2 angedeutet ist - begrenzt ist, weist die Empfangseinheit 101 auch einen relativ breiten Erfassungswinkel in vertikaler Richtung auf (also in Richtung senkrecht zur Zeichnungsebene). Um dies zu gewährleisten, beinhaltet die Empfangsoptik 110 eine Vielzahl von Optikelementen 114, welche aus unterschiedlichen vertikalen Richtungen einfallende Empfangsstrahle 107 empfangen können.

Somit werden in der Elevation mehrere Erfassungszonen gebildet, sodass neben einem breiten Erfassungsbereich in vertikaler Richtung (senkrecht zur Zeichnungsebene) auch eine Unterscheidung zwischen Objekten in verschiedenen vertikalen Zonen getroffen werden kann. Beispielsweise kann mindestens ein Optikelement 114a - zum Beispiel die äußeren Optikelemente 114a - so ausgebildet und angeordnet sein, dass seine Haupterfassungsrichtung bezüglich der horizontalen Ebene nach unten orientiert ist und somit in Richtung zum Boden zeigt. Beispielsweise kann dieses mindestens eine Optikelement 114a auf einen Bereich von 1 m vor dem Kraftfahrzeug ausgerichtet sein, um beispielsweise vor oder hinter dem Kraftfahrzeug befindliche Personen zu detektieren. Zumindest ein Optikelement 114b - beispielsweise die mittleren drei Optikelemente 114b, wie in Fig. 2 schematisch dargestellt ist - kann demgegenüber bezüglich der horizontalen Ebene nach oben ausgerichtet sein, sodass seine Haupterfassungsrichtung beziehungsweise Hauptempfangsrichtung bezüglich der horizontalen Ebene nach oben zeigt. Somit wird die Erfassung von beispielsweise Tunneldecken oder aber Brücken ermöglicht, und es kann beispielsweise ein Scheinwerfer des Kraftfahrzeugs unter Berücksichtigung dieser Informationen angesteuert werden. Die Haupterfassungsrichtung kann hier mit der horizontalen Ebene einen Winkel einschließen, der in einem Wertebereich von 10° bis 50° liegt. Die übrigen Optikelemente 114 können beispielsweise auf einen solchen vertikalen Winkel bezüglich der horizontalen Ebene eingestellt sein, bei welchem diese Optikelemente 114 in vertikaler Richtung eine Haupterfassungsrichtung aufweisen, welche zwischen den Haupterfassungsrichtungen der Optikelemente 114a und 114b liegt. Beispielsweise kann diese Haupterfassungsrichtung auch mit der Horizontalen zusammenfallen.

Wie also in Fig. 2 schematisch dargestellt ist, fallen die jeweiligen Empfangsstrahle 107, 107a und 107b jeweils aus anderen vertikalen Richtungen ein, wodurch die jeweils unterschiedlichen Haupterfassungsrichtungen der einzelnen Optikelemente 114 in vertikaler Richtung angedeutet sind. Die in Fig. 2 unterschiedlich ausgerichteten Empfangsstrahle 107, 107a, 107b sowie auch unterschiedlich orientierten Optikelemente 114, 114a, 114b sollen also die unterschiedlichen Haupterfassungsrichtungen der jeweiligen Optikelemente in vertikaler Richtung schematisch verdeutlichen.

Die Empfangsoptik 110 kann gemäß einer Ausführungsform als eine einzige Linse bereitgestellt sein, welche zu jedem Empfangselement 104 jeweils eine Mikrolinse als Optikelemente 114 aufweist. Diese Mikrolinsen können dann beispielsweise in vertikaler Richtung unterschiedlich ausgerichtet sein. Alternativ können auch zu jedem Empfangselement 104 jeweils separate Linsen als Optikelemente 114 eingesetzt werden, die in vertikaler Richtung unterschiedlich ausgerichtet sind. Es kann auch vorgesehen sein, dass diese Linsen beziehungsweise die Mikrolinsen gleich ausgerichtet sind und zusätzlich beispielsweise kleine Spiegelelemente eingesetzt werden, durch welche die Haupterfassungsrichtung der jeweiligen Empfangselemente 104 definiert wird.

## Patentansprüche

1. Optoelektronische Sensoreinrichtung (102) für ein Kraftfahrzeug, zum Erfassen von in einem Umgebungsbereich des Kraftfahrzeugs befindlichen Objekten, mit einer Sendeeinheit zum Aussenden eines optischen Sendestrahls, und mit einer Empfangseinheit (101) zum Empfangen eines Empfangsstrahls (107), welcher der von einem Objekt reflektierte Sendestrahl ist, wobei die Empfangseinheit (101) zumindest zwei entlang einer Verteilungsrichtung (103) verteilt angeordnete Empfangselemente (104), insbesondere Photodioden, jeweils zum Empfangen des Empfangsstrahls (107) sowie eine Empfangsoptik (110) aufweist, welche in einem Empfangsstrahlengang (108) in Ausbreitungsrichtung (109) des Empfangsstrahls (107) vor den Empfangselementen (104) angeordnet ist,
**dadurch gekennzeichnet, dass**
die Empfangsoptik (110) für die zumindest zwei Empfangselemente (104) jeweilige Optikelemente (114) aufweist, welche zum Umlenken des Empfangsstrahls (107) auf das jeweils zugeordnete Empfangselement (104) ausgebildet sind, wobei ein erstes der Optikelemente (114) dazu ausgebildet ist, einen aus einem ersten Vertikalwinkel bezüglich einer horizontalen Ebene einfallenden Empfangsstrahl (107) auf das zugeordnete Empfangselement (104) umzulenken, und ein zweites der Optikelemente (114) dazu ausgebildet ist, einen aus einem von dem ersten Vertikalwinkel unterschiedlichen zweiten Vertikalwinkel bezüglich der horizontalen Ebene einfallenden Empfangsstrahl (107) auf das zugeordnete Empfangselement (104) umzulenken und das erste Optikelement (114) zur Umlenkung des Empfangsstrahls (107) auf das zugeordnete Empfangselement (104) in einer ersten Neigung bezüglich der horizontalen Ebene angeordnet ist und das zweite Optikelement (114) bezüglich der horizontalen ebene in einer von der ersten Neigung unterschiedlichen Neigung zur Umlenkung des Empfangsstrahls (107) auf das zugeordnete Empfangselement (104) angeordnet ist.

2. Sensoreinrichtung (102) nach Anspruch 1,
**dadurch gekennzeichnet, dass**
die Verteilungsrichtung (103) mit der Horizontalen zusammenfällt, sodass die Empfangselemente (104) entlang der Horizontalen verteilt angeordnet sind.

3. Sensoreinrichtung (102) nach einem der vorhergehenden Ansprüche,
**dadurch gekennzeichnet, dass**
die Empfangseinheit (101) mindestens drei Empfangselemente (104) aufweist und die Empfangsoptik (110) für alle Empfangselemente (104) jeweils ein Optikelement (114) aufweist, wobei die Optikelemente (114) dazu ausgebildet sind, auf das jeweils zugeordnete Empfangselement (104) Empfangsstrahle auszurichten, welche aus jeweils unterschiedlichen Winkeln bezüglich der horizontalen Ebene einfallen, so dass in vertikaler Richtung die zumindest drei Optikelemente (114) jeweils unterschiedliche Hauptempfangsrichtungen aufweisen.

4. Sensoreinrichtung (102) nach einem der vorhergehenden Ansprüche,
**dadurch gekennzeichnet, dass**
die Empfangsoptik (110) als eine für die zumindest zwei Empfangselemente (104) gemeinsame Linse ausgebildet ist, in welche zumindest zwei Mikrolinsen als Optikelemente (114) integriert sind.

5. Sensoreinrichtung (102) nach einem der Ansprüche 1 bis 3,
**dadurch gekennzeichnet, dass**
die zumindest zwei Optikelemente (114) als voneinander separate Linsen ausgebildet sind, welche insbesondere bezüglich der horizontalen Ebene unterschiedlich ausgerichtet sind.

6. Sensoreinrichtung (102) nach einem der vorhergehenden Ansprüche,
**dadurch gekennzeichnet, dass**
die Empfangsoptik (110) aus Kunststoff gebildet ist.

7. Sensoreinrichtung (102) nach einem der vorhergehenden Ansprüche,
**dadurch gekennzeichnet, dass**
eines der Optikelemente (114) dazu ausgebildet ist, einen bezüglich der horizontalen Ebene von oben einfallenden Empfangsstrahl (107) auf das zugeordnete Empfangselement (104) auszurichten.

8. Sensoreinrichtung (102) nach einem der vorhergehenden Ansprüche,
**dadurch gekennzeichnet, dass**
eines der Optikelemente (114) dazu ausgebildet ist, einen bezüglich der horizontalen Ebene von unten einfallenden Empfangsstrahl (107) auf das zugeordnete Empfangselement (104) auszurichten.

9. Kraftfahrzeug mit einer optoelektronischen Sensoreinrichtung (102) nach einem der vorhergehenden Ansprüche.

10. Verfahren zum Betreiben einer optoelektronischen Sensoreinrichtung (102) eines Kraftfahrzeugs, mittels welcher in einem Umgebungsbereich des Kraftfahrzeugs befindliche Objekte erfasst werden, wobei mittels einer Sendeeinheit der Sensoreinrichtung (102) ein optischer Sendestrahl ausgesendet wird und mittels einer Empfangseinheit (101) ein Empfangsstrahl (107) empfangen wird, welcher der von einem Objekt reflektierte Sendestrahl ist, und wobei die Empfangseinheit (101) zumindest zwei entlang einer Verteilungsrichtung (103) verteilt angeordnete Empfangselemente (104), insbesondere Photodioden, jeweils zum Empfangen des Empfangsstrahls (107) sowie eine Empfangsoptik (110) aufweist, welche in einem Empfangsstrahlengang (108) in Ausbreitungsrichtung (109) des Empfangsstrahls (107) vor den Empfangselementen (104) angeordnet ist,
**dadurch gekennzeichnet, dass**
die Empfangsoptik (110) für die zumindest zwei Empfangselemente (104) jeweilige Optikelemente (114) aufweist, welche zum Umlenken des Empfangsstrahls (107) auf das jeweils zugeordnete Empfangselement (104) ausgebildet sind, wobei ein erstes der Optikelemente (114) einen aus einem ersten Vertikalwinkel bezüglich einer horizontalen Ebene einfallenden Empfangsstrahl (107) auf das zugeordnete Empfangselement (104) umlenkt und ein zweites der Optikelemente (114) einen aus einem von dem ersten Vertikalwinkel unterschiedlichen zweiten Vertikalwinkel bezüglich der horizontalen Ebene einfallenden Empfangsstrahl (107) auf das zugeordnete Empfangselement (104) umlenkt und das erste Optikelement (114) zur Umlenkung des Empfangsstrahls (107) auf das zugeordnete Empfangselement (104) in einer ersten Neigung bezüglich der horizontalen Ebene angeordnet ist und das zweite Optikelement (114) bezüglich der horizontalen ebene in einer von der ersten Neigung unterschiedlichen Neigung zur Umlenkung des Empfangsstrahls (107) auf das zugeordnete Empfangselement (104) angeordnet ist.

## Claims

1. Optoelectronic sensor device (102) for a motor vehicle for capturing objects situated in surroundings of the motor vehicle, with a transmission unit for emitting an optical transmission beam and with a reception unit (101) for receiving a reception beam (107), which is the transmission beam reflected by an object, wherein the reception unit (101) has at least two reception elements (104), in particular photodiodes, that are arranged distributed along a distribution direction (103), in each case for receiving the reception beam (107), and a reception optical unit (110) which, in a reception beam path (108), is arranged upstream of the reception elements (104) in the propagation direction (109) of the reception beam (107),
**characterized in that**
the reception optical unit (110) has respective optical elements (114) for the at least two reception elements (104), said optical elements being embodied to deflect the reception beam (107) onto the respectively assigned reception element (104), wherein a first of the optical elements (114) is embodied to deflect a reception beam (107) that is incident from a first vertical angle in respect of a horizontal plane onto the assigned reception element (104) and a second of the optical elements (114) is embodied to deflect a reception beam (107) that is incident from a second vertical angle, different from the first vertical angle, in respect of the horizontal plane onto the assigned reception element (104) and the first optical element (114) is arranged at a first inclination in respect of the horizontal plane for the purposes of deflecting the reception beam (107) onto the assigned reception element (104) and the second optical element (114) is arranged at an inclination, differing from the first inclination, in respect of the horizontal plane for the purposes of deflecting the reception beam (107) onto the assigned reception element (104).

2. Sensor device (102) according to Claim 1,
**characterized in that**
the distribution direction (103) coincides with the horizontal such that the reception elements (104) are arranged distributed along the horizontal.

3. Sensor device (102) according to any one of the preceding claims,
**characterized in that**
the reception unit (101) has at least three reception elements (104) and the reception optical unit (110) in each case has an optical element (114) for all reception elements (104), wherein the optical elements (114) are embodied to direct reception beams onto the respectively assigned reception element (104), said reception beams being incident from different angles in each case in respect of the horizontal plane such that, in the vertical direction, the at least three optical elements (114) each have different principal reception directions.

4. Sensor device (102) according to any one of the preceding claims,
**characterized in that**
the reception optical unit (110) is embodied as a lens that is common to the at least two reception elements (104), at least two micro-lenses being integrated in said common lens as optical elements (114) .

5. Sensor device (102) according to any one of Claims 1 to 3,
**characterized in that**
the at least two optical elements (114) are embodied as mutually separate lenses which, in particular, have a different alignment in respect of the horizontal plane.

6. Sensor device (102) according to any one of the preceding claims,
**characterized in that**
the reception optical unit (110) is formed from plastics.

7. Sensor device (102) according to any one of the preceding claims,
**characterized in that**
one of the optical elements (114) is embodied to align a reception beam (107), which is incident from above in respect of the horizontal plane, on the assigned reception element (104).

8. Sensor device (102) according to any one of the preceding claims,
**characterized in that**
one of the optical elements (114) is embodied to align a reception beam (107), which is incident from below in respect of the horizontal plane, on the assigned reception element (104).

9. Motor vehicle with an optoelectronic sensor device (102) according to any one of the preceding claims.

10. Method for operating an optoelectronic sensor device (102) of a motor vehicle, by means of which objects situated in surroundings of the motor vehicle are captured, wherein an optical transmission beam is emitted by means of a transmission unit of the sensor device (102) and a reception beam (107) is received by means of a reception unit (101), said reception beam being the transmission beam reflected by an object, and wherein the reception unit (101) has at least two reception elements (104), in particular photodiodes, that are arranged distributed along a distribution direction (103), in each case for receiving the reception beam (107), and a reception optical unit (110) which, in a reception beam path (108), is arranged upstream of the reception elements (104) in the propagation direction (109) of the reception beam (107),
**characterized in that**
the reception optical unit (110) has respective optical elements (114) for the at least two reception elements (104), said optical elements being embodied to deflect the reception beam (107) onto the respectively assigned reception elements (104), wherein a first of the optical elements (114) deflects a reception beam (107) that is incident from a first vertical angle in respect of a horizontal plane onto the assigned reception element (104) and a second of the optical elements (114) deflects a reception beam (107) that is incident from a second vertical angle, different from the first vertical angle, in respect of the horizontal plane onto the assigned reception element (104) and the first optical element (114) is arranged at a first inclination in respect of the horizontal plane for the purposes of deflecting the reception beam (107) onto the assigned reception element (104) and the second optical element (114) is arranged at an inclination, differing from the first inclination, in respect of the horizontal plane for the purposes of deflecting the reception beam (107) onto the assigned reception element (104).

## Revendications

1. Dispositif capteur optoélectronique (102) destiné à un véhicule automobile, pour détecter des objets se trouvant dans une zone voisine du véhicule automobile, comportant une unité d'émission destinée à émettre un faisceau d'émission optique, et comportant une unité de réception (101) destinée à recevoir un faisceau de réception (107), lequel faisceau est le faisceau d'émission réfléchi par un objet, dans lequel l'unité de réception (101) comporte au moins deux éléments de réception (104) répartis le long d'une direction de répartition (103), chacun destiné à recevoir le faisceau de réception (107), ainsi qu'une optique de réception (110) qui est disposée sur un chemin de faisceau de réception (108) dans la direction de propagation (109) du faisceau de réception (107) à l'avant des éléments de réception (104),
**caractérisé en ce que** l'optique de réception (110) comporte des éléments optiques (114) respectifs destinés aux au moins deux éléments de réception (104), qui sont conçus pour dévier le faisceau de réception (107) vers l'élément de réception (104) respectivement associé, dans lequel un premier des éléments optiques (114) est conçu pour dévier vers l'élément de réception (104) associé un faisceau de réception (107) incident sous un premier angle vertical par rapport à un plan horizontal, et un deuxième des éléments optiques (114) est conçu pour dévier vers l'élément de réception (104) associé un faisceau de réception (107) incident sous un deuxième angle vertical différent du premier angle vertical par rapport au plan horizontal, et le premier élément optique (114) est disposé selon une première inclinaison par rapport au plan horizontal pour dévier le faisceau de réception (107) vers l'élément de réception (104) associé et le deuxième élément optique (114) est disposé selon une inclinaison différente de la première inclinaison par rapport au plan horizontal pour dévier le faisceau de réception (107) vers l'élément de réception (104) associé.

2. Dispositif capteur (102) selon la revendication 1, **caractérisé en ce que** la direction de répartition (103) coïncide avec l'horizontale de sorte que les éléments de réception (104) sont disposés de manière répartie le long de l'horizontale.

3. Dispositif capteur (102) selon l'une des revendications précédentes,
**caractérisé en ce que** l'unité de réception (101) comporte au moins trois éléments de réception (104) et **en ce que** l'optique de réception (110) comporte respectivement pour tous les éléments de réception (104) un élément optique (114), dans lequel les éléments optiques (114) sont conçus pour orienter vers l'élément de réception (104) respectivement associé des faisceaux de réception qui sont incidents sous des angles respectivement différents par rapport au plan horizontal, de manière à ce que les au moins trois éléments optiques (114) présentent respectivement des directions de réception principales différentes dans la direction verticale.

4. Dispositif capteur (102) selon l'une des revendications précédentes,
**caractérisé en ce que** l'optique de réception (110) est réalisée sous la forme d'une lentille commune pour les au moins deux éléments de réception (104), dans laquelle sont intégrés au moins deux microlentilles en tant qu'éléments optiques (114).

5. Dispositif capteur (102) selon l'une des revendications 1 à 3,
**caractérisé en ce que** les au moins deux éléments optiques (114) sont réalisés sous la forme de lentilles séparées l'une de l'autre, qui sont notamment orientées de manière différente par rapport au plan horizontal.

6. Dispositif capteur (102) selon l'une des revendications précédentes,
**caractérisé en ce que** l'optique de réception (110) est constituée de matière plastique.

7. Dispositif capteur (102) selon l'une des revendications précédentes,
**caractérisé en ce que** l'un des éléments optiques (114) est conçu pour orienter un faisceau de réception (107) incident par le haut par rapport au plan horizontal vers l'élément de réception (104) associé.

8. Dispositif capteur (102) selon l'une des revendications précédentes,
**caractérisé en ce que** l'un des éléments optiques (114) est conçu pour orienter vers l'élément de réception (104) associé un faisceau de réception (107) incident par le bas par rapport au plan horizontal.

9. Véhicule automobile avec un dispositif capteur optoélectronique (102) selon l'une des revendications précédentes.

10. Procédé de mise en fonctionnement d'un dispositif capteur (102) optoélectronique d'un véhicule automobile, au moyen duquel des objets se trouvant dans la zone voisine du véhicule sont détectés, dans lequel un faisceau d'émission optique est émis au moyen d'une unité d'émission du dispositif capteur (102) et un faisceau de réception (107) et reçu au moyen d'une unité de réception (101), lequel faisceau est le faisceau d'émission réfléchi par un objet, et dans lequel l'unité de réception (101) comporte au moins deux éléments de réception (104) disposés de manière répartie le long d'une direction de répartition (103), en particulier des photodiodes, chacun destiné à recevoir le faisceau de réception (107), ainsi qu'une optique de réception (110) qui est disposée sur un chemin de faisceau de réception (108) dans la direction de propagation (109) du faisceau de réception (107) à l'avant des éléments de réception (104),
**caractérisé en ce que** l'optique de réception (110) comporte, pour les au moins deux éléments de réception (104), des éléments optiques (114) respectifs qui sont conçus pour dévier le faisceau de réception (107) vers l'élément de réception (104) associé respectif, dans lequel un premier des éléments optiques (114) dévie vers l'élément de réception (104) associé un faisceau de réception (107) incident sous un premier angle vertical par rapport à un plan horizontal et un deuxième élément optique (114) dévie vers l'élément de réception (104) associé un faisceau de réception (107) incident sous un deuxième angle vertical différent du premier angle vertical par rapport au plan horizontal, et le premier élément optique (114) est disposé selon une première inclinaison par rapport au plan horizontal pour dévier le faisceau de réception (107) vers l'élément de réception (104) associé, et le deuxième élément optique (114) est disposé selon une inclinaison différente de la première inclinaison par rapport au plan horizontal pour dévier le faisceau de réception (107) vers l'élément de réception (104) associé.
